# EUROPEAN PATENT APPLICATION

(11) **EP 4 715 882 A1**
(43) Date of publication of application: **25.03.2026**
(21) Application number: 24897960.1
(22) Date of filing: 14.11.2024
(51) Int. Cl.: H01M 4/04, H01M 4/139, H01M 10/052, B65H 23/182, B65H 35/04, B26D 1/08, B26D 7/08, H01M 4/02

(54) **METHOD FOR PROCESSING LITHIUM METAL OF NEGATIVE ELECTRODE IN ELECTRODE ASSEMBLY**

(30) Priority: 27.11.2023 KR 20230166957
(71) Applicant: LG Energy Solution, Ltd., Seoul 07335 (KR)
(72) Inventor: KIM, Ki Tae, Daejeon 34122 (KR); LEE, Junghoon, Daejeon 34122 (KR); KIM, Hyeon Jin, Daejeon 34122 (KR); HAN, Suenghoon, Daejeon 34122 (KR)
(74) Representative: Goddar, Heinz J.
(86) International application number: PCT/KR2024/017944
(87) International publication number: WO 2025/116364

(57) **Abstract**

A method of processing lithium metal for the negative electrode of an electrode assembly is provided. The processing method comprises the steps of: supplying raw materials by separating a first raw material comprising lithium metal bonded with a first protective layer on one side, and a second raw material comprising a second protective layer, so that the lithium metal is located between the first and second protective layers; cutting the lithium metal by pressurizing the supplied raw materials with a cutter on the first and second protective layers; and recovering the raw materials by separating the first and second raw materials after cutting. The method of processing lithium metal according to one embodiment of the present invention is effective for processing longitudinally extended lithium metal that is applied as a negative electrode in a stacked-folded electrode assembly, and can produce highly reliable processed lithium metal.

## Description

### [Technical Field]

The present invention relates to a method for processing lithium metal for the negative electrode of an electrode assembly. Specifically, the present invention relates to a method for processing a longitudinally extended lithium metal applied as a negative electrode to a stacked-folded electrode assembly.

This application claims the benefit of priority to Korean Patent Application No. 10-2023-0166957, filed November 27, 2023, the disclosures of which are incorporated herein by reference as part of this specification.

### [Related Art]

In recent years, there has been a growing interest in energy storage technology. As application areas expand from mobile phones, camcorders and laptop PCs to energy for electric vehicles, efforts in battery research and development are becoming more concrete. In this regard, electrochemical devices are one of the most promising areas, and especially, the development of secondary batteries is drawing attention as the batteries with miniaturization and light weight, and capable of charging and discharging with high capacity, in light of the recent trend toward miniaturization and light weight of electronic devices.

Secondary batteries are also categorized by the structure of the electrode assembly consisting of positive electrode/separator/negative electrode. For example, electrode assemblies are categorized into jelly-roll (wound) electrode assemblies, which are the wound long sheet of positive electrodes and negative electrodes with separators, and stacked electrode assemblies, wherein multiple positive electrodes and negative electrodes cut into predetermined sized units with separators are stacked sequentially.

However, these conventional electrode assemblies have several problems.

First, the jelly-roll electrode assembly is made by winding the long sheet of positive electrodes and negative electrodes in a dense state, thereby to have a cylindrical or elliptical cross-section. In such a structure, stresses caused by the expansion and contraction of the electrodes during charge and discharge accumulate in the electrode assembly, and when such stress accumulation exceeds a certain threshold, deformation of the electrode assembly occurs. Furthermore, the deformation of the electrode assembly may cause uneven spacing between the electrodes, resulting in a significant deterioration in battery performance, and potentially causing safety issues due to internal short circuits. Furthermore, since the jelly-roll electrode assembly requires winding long sheets of the positive electrodes and negative electrodes, it is difficult to wind these electrodes quickly while maintaining a constant spacing between the electrodes, resulting in reduced productivity.

Second, the stacked electrode assembly requires sequential stacking of multiple positive electrode units and negative electrode units. In this process, a separate electrode plate transfer process is required to manufacture the unit, and the sequential stacking process demands significant time and effort, resulting in low productivity for stacked electrode assemblies.

To solve these problems, a stacked-folded electrode assembly with an advanced structure that is a hybrid of the jelly-roll type and stacked type has been developed. The stacked-folded electrode assembly has a structure in which bi-cells or full cells stacked with separators between the positive electrodes and negative electrodes of a predetermined unit are wound using a long continuous separator sheet (folded separator).

The stacked-folded electrode assembly typically connects the electrodes of each layer by extending the separator that is easier to fold, rather than extending the electrodes. In this process, the electrodes of each layer are supplied in a cut state for formation of the electrode assembly, as in the stacked electrode assembly. In the relevant art, if the secondary battery is composed of materials that are easily cut or not easily folded among a variety of conventional electrode materials for secondary batteries in the art, the general stacked-folded electrode assembly is more suitable. On the other hand, lithium metal, which is well-known as a negative electrode material for secondary batteries in the art, may not be suitable for conventional stacked-folded electrode assemblies because lithium metal is not easy to be processed by, such as, cutting, due to its physical properties such as high ductile and viscosity, and it is relatively easy to be folded.

Currently, various research efforts are underway on a new type of stacked-folded electrode assembly, which is fabricated using only one negative electrode structure, with the lithium metal of the negative electrode interposed between two separators to form a longitudinal extension. The inventor of the present invention has studied a method of effectively processing lithium metal, which can be applied to the new type of stacked-folded electrode assembly described above, and has completed the present invention.

### [Prior Art Reference]

### [Patent Reference]

(Patent Reference 1) Korean Patent Publication No. 10-2022-0035741

### [Detailed Description of the Invention]

### [Technical Problem]

The present invention seeks to provide a method for processing a longitudinally extended lithium metal applied as a negative electrode to a stacked-folded electrode assembly.

### [Technical Solution]

According to a first aspect of the present invention, the present invention provides a method for processing lithium metal for the negative electrode of an electrode assembly.

In one embodiment of the present invention, the method comprises the steps of: supplying raw materials by separating a first raw material comprising lithium metal bonded with a first protective layer on one side and a second raw material comprising a second protective layer, so that the lithium metal is located between the first and second protective layers; cutting the lithium metal by pressurizing the supplied raw materials with a cutter on the first and second protective layers; and recovering the raw materials by separating the first and second raw materials after cutting.

In one embodiment of the present invention, the first raw material is supplied and recovered by a first set of rolls, the second raw material is supplied and recovered by a second set of rolls, and each of the first set of rolls and second set of rolls consists of a plurality of rolls through which the raw material can be moved.

In one embodiment of the present invention, the first protective layer and the second protective layer are polymeric protective films of different materials.

In one embodiment of the present invention, the first protective layer is a polyolefin-based polymeric protective film.

In one embodiment of the present invention, the second protective layer is a polyester-based polymeric protective film.

In one embodiment of the present invention, in the cutting step, the first raw material and the second raw material are spaced apart before being pressed by the cutter.

In one embodiment of the invention, the cutter is composed of a cutting portion and a supporting portion, wherein these portions are located opposite each other relative to the lithium metal.

In one embodiment of the present invention, the cutting portion comprises a protruding cutting blade, wherein the cutting portion moves toward the supporting portion to pressurize the raw material to cut the lithium metal.

**In** one embodiment of the present invention, the internal space between the cutting blades protruding from the cutting portion is filled with a buffer material.

**In** one embodiment of the present invention, the lithium metal is cut by pressurization of a protruding cutting blade and ultrasonication.

**In** one embodiment of the present invention, each of the first set of rolls and the second set of rolls includes a dancer roll capable of adjusting the tension of the raw material running on the rolls. By means of the dancer roll, the first raw material running on the first set of rolls and the second raw material running on the second set of rolls have different tensions.

**In** one embodiment of the present invention, the first raw material running on the first set of rolls has a tension of 20 N/m to 40 N/m.

In one embodiment of the present invention, the second raw material running on the second set of rolls has a tension of 40 N/m to 60 N/m.

In one embodiment of the present invention, the tension of the first raw material is reduced by 10% to 20% when in contact with the cutter compared to when running.

In one embodiment of the present invention, the cutting step cuts the lithium metal to form tabs.

In one embodiment of the present invention, the cutting step cuts the lithium metal to form tabs and chamfers.

In one embodiment of the present invention, pair of tabs adjacent relative to the chamfer are spaced apart by an equal distance from the chamfer.

In one embodiment of the present invention, the tabs are positioned closer to one of a pair of adjacent chamfers relative to the tabs.

In one embodiment of the present invention, when the areas separated by the four chamfers is viewed as one unit area, the cutter cuts two or more unit areas at once.

In one embodiment of the present invention, in the cutting step, a unit area without a tab is fabricated by overlapping cuts after moving by only one unit area following the initial cut.

In one embodiment of the present invention, the cut lithium metal pieces of the first raw material are removed in the recovering step.

In one embodiment of the present invention, the first raw material from which the lithium metal pieces are removed in the above recovering step is separated into the processed lithium metal and the first protective layer, and they are recovered.

In one embodiment of the present invention, the cutting blade has an asymmetrical shape on both sides relative to the end of the cutting blade.

In one embodiment of the present invention, the process of separating the first raw material and the second raw material in the recovering step is checked by means of a sensor.

In one embodiment of the invention, when the lithium metal and the second protective layer are in contact, the cutting blade generates ultrasonic waves.

### [Advantageous Effects]

The method of processing lithium metal according to one embodiment of the present invention is effective for processing longitudinally extended lithium metal that is applied as a negative electrode in a stacked-folded electrode assembly, and can produce highly reliable processed lithium metal.

According to the above lithium metal processing method, the processing speed can be improved through a continuous process, and defects such as adhesion of the lithium metal to the processing device or wrinkling of the manufactured lithium metal can be minimized, so that the above lithium metal processing method can be suitable for mass production.

### [Brief Description of Drawing]

FIG. 1 is a schematic illustration of the structure of an electrode assembly comprising a negative electrode structure with lithium metal interposed between two separators, and a positive electrode, in accordance with one embodiment of the present invention.
FIG. 2 is a schematic drawing of a structure of lithium metal processed for application to an electrode assembly in accordance with one embodiment of the present invention. FIG. 2 shows the lithium metal with tabs formed on each layer, which indicates the stacked portion.
FIG. 3 is a schematic drawing of the structure of lithium metal processed for application to an electrode assembly in accordance with one embodiment of the present invention. In FIG. 3, the lithium metal is divided into a portion with a tab and a portion without a tab, where the portion with a tab corresponds to a stacked portion, and the portion without a tab corresponds to a wrapping portion.
FIG. 4 is a schematic illustration of the structure of a device capable of implementing the method of processing lithium metal according to one embodiment of the present invention.
FIG. 5 is an enlarged view of a cutting position in a device for processing lithium metal according to one embodiment of the present invention.
FIG. 6 is a diagram schematically illustrating the cutting process of lithium metal according to one embodiment of the present invention. FIG. 6(a) shows the position of the cutting portion before cutting, and FIG. 6(b) shows the position of the cutting portion after cutting.
FIG. 7 is a schematic illustration of a cutting portion including a cutting blade and a buffer material, in accordance with one embodiment of the present invention.
FIG. 8 is a schematic illustration of the shape of the end of the cutting blade in a cutting portion according to one embodiment of the present invention.

### [Best Mode]

The detail of the example of the present invention is provided in the following descriptions. It should be noted that in assigning reference numerals to the components in each drawing, identical components, even in different drawings, are given the same numerals as much as possible. In addition, in describing the examples, if a detailed description on a related known constitution or feature is deemed to interfere with an understanding of the examples, the detailed description is omitted.

In addition, terms such as first, second, A, B, (a), (b), and the like may be used to describe components of the examples. Such terms are intended only to distinguish one component from another, and the nature, sequence or order of such components is not limited by such terms. When a component is described as being "connected," "coupled," or "abutted" to another component, it is to be understood that the component may be directly connected or contacted to the other component, but another component may be "connected," "coupled," or "abutted" between these components.

Components included in one example, and components having common functions, are described using the same terms in other examples. Unless otherwise indicated, descriptions in one example may be applied to other examples, and specific descriptions which are redundant are omitted.

The present invention relates to a method of processing lithium metal for the negative electrode of an electrode assembly, and the method of processing lithium metal according to one embodiment of the present invention may be suitable for processing lithium metal applied to a novel form of stacked-folded electrode assembly. A new type of stacked-folded electrode assembly may be an electrode assembly that is manufactured using, for example, only one negative electrode structure with the lithium metal of the negative electrode sandwiched between two separators. The electrode assembly is characterized by the use of lithium metal that is sufficiently extended in the longitudinal direction. Due to its physical properties such as high ductile and viscosity, lithium metal is not easy to be processed by, such as, cutting, and the longer the length, the more difficult it is to handle, which can cause defects during or after processing. As used herein, the term "processing" refers to the process of bringing lithium metal supplied in a raw state to a size suitable for application to an electrode assembly, wherein the lithium metal may be cut to form tabs. According to a method of processing lithium metal according to one embodiment of the present invention, defects such as adhesion of lithium metal to a processing device or wrinkling of manufactured lithium metal can be minimized.

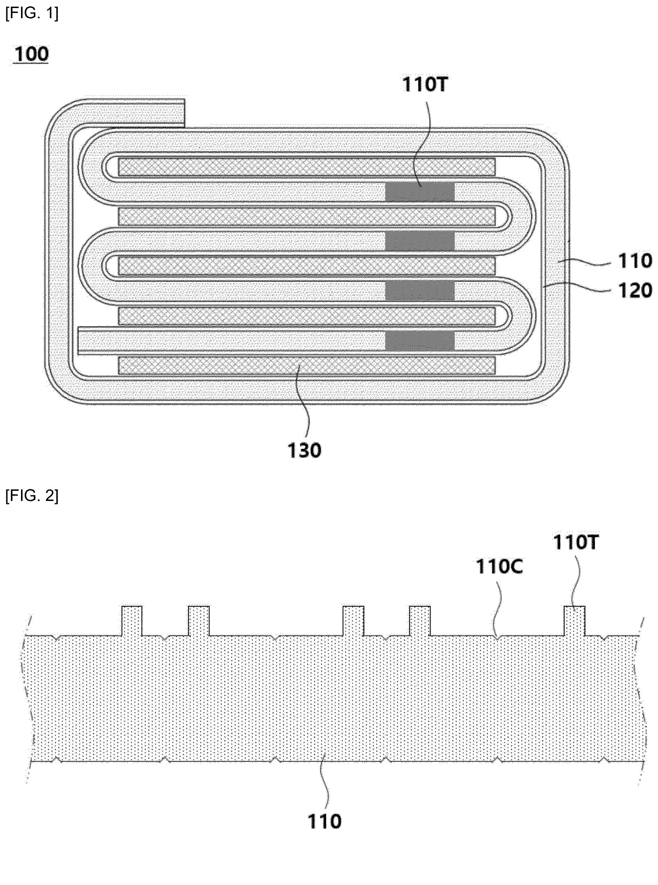

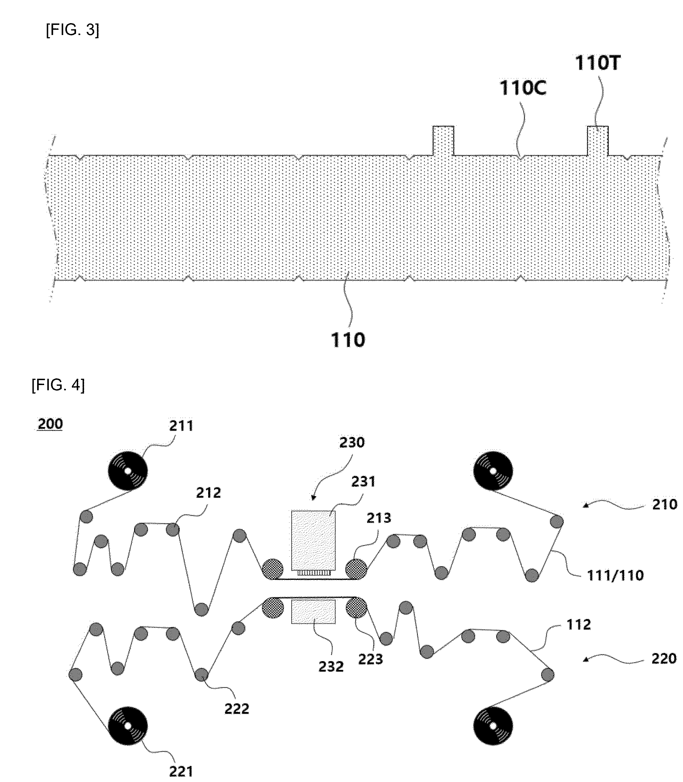

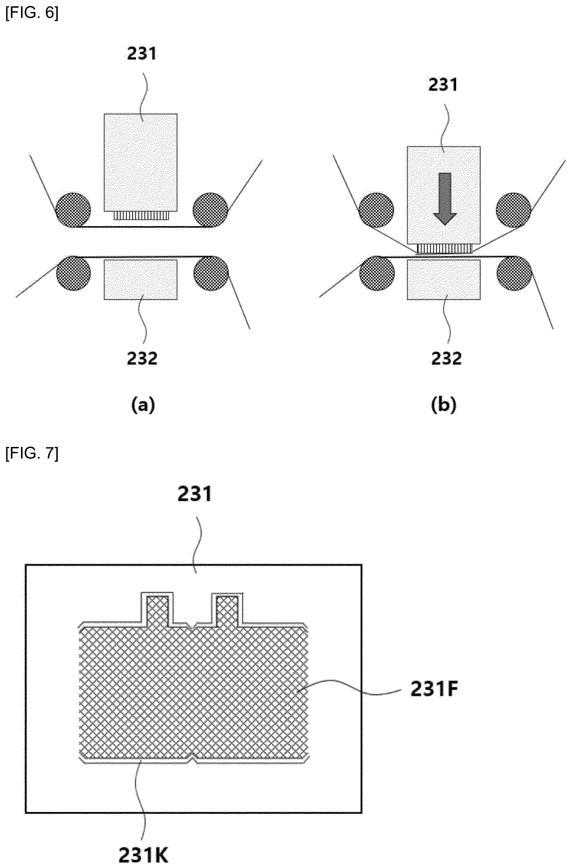

The terms "longitudinal direction", "width direction" and "thickness direction" (or "height direction") are used in this specification. Drawings herein such as FIGs. 1, 4, 5, and 6 are frontal views, wherein the "longitudinal direction" refers to a side-to-side direction with respect to such frontal view, the "width direction" refers to a front-to-back direction with respect to such frontal view, and the "thickness direction" (or "height direction") refers to an up-and-down direction with respect to such frontal view. As used herein, drawings such as FIGs. 2 and 3 are top views, and drawings such as FIG. 7 are bottom views, wherein, with reference to such top and bottom views, the "longitudinal direction" refers to a side-to-side direction in the drawings, the "width direction" refers to an up-down direction in the drawings, and "thickness direction" (or "height direction") refers to a front-to-back direction in the drawings.

As used herein, the term "adjacent" means the subject that is closest to the reference among the plurality of subjects referred to thereby. If there are multiple subjects located in both directions of the reference, the adjacent subjects are selected separately for each direction. Adjacent subject is not necessarily contacted to the reference.

As used herein, the term "bonded" means that two materials are brought together with some degree of adhesion. For example, the first raw material exists with a first protective layer bonded to one side of the lithium metal, meaning that the lithium metal is in contact with the first protective layer with a certain degree of adhesion, and the first protective layer can be separated from the lithium metal as needed.

To facilitate an understanding of the present invention, a novel form of stacked-folded electrode assembly suitable for application of lithium metal processed by the lithium metal processing method of the present invention will first be described in detail. The stacked-folded electrode assembly described herein is merely an example, and the method for processing lithium metal according to one embodiment of the present invention may be effectively applied when processing longitudinally extended lithium metal.

The stacked-folded electrode assembly includes a positive electrode, a negative electrode, and a separator. In the electrode assembly, the positive electrode and the separator are not particularly limited as long as materials are commonly used in the art, but lithium metal is used as the negative electrode. As used herein, lithium metal can be broadly construed even if lithium is added with a certain component or is an alloy with a certain metal, as long as it does not significantly differ in properties from lithium metal and can be applied to conventional electrode assemblies, which causes the same problems as lithium metal. As used herein, the negative electrode may be referred to as a lithium metal layer in that it includes lithium metal, and the negative electrode and the separator may be referred to as a negative electrode structure in that they are provided as a single integral constitution.

The negative electrode is interposed between the two separators to form a negative electrode structure. The negative electrode structure has a longitudinally extended structure, and the electrode assembly includes only one negative electrode structure. The negative electrode structure with a longitudinally extended structure is folded to form a basic electrode assembly structure, such as fixing a positive electrode therein. Interposing the lithium metal, which is a negative electrode, between the two separators is a step after processing lithium metal by the method of processing lithium metal according to one embodiment of the present invention. For example, a negative electrode structure can be fabricated by placing lithium metal between two separators and then pressing it from both sides.

The negative electrode structure includes one stack initiation portion, a plurality of stacked portions, a plurality of folding portions, and one wrapping portion, depending on position in the electrode assembly. Since the stack initiation portion has no particular difference in function from the stacked portion, the stack initiation portion may also be included in the stacked portion. When the stack initiation portion is specified, the stacked portion means a stacked portion except for the stack initiation portion. In the above negative electrode structure, the stacked portion, the folding portion, and the wrapping portion are units that distinguish positions having different functions along the longitudinal direction of the negative electrode structure. Here, the stacked portion located at one end of the negative electrode structure is the stack initiation portion. The stacked portion, folding portion and wrapping portion are not distinguished by material but by position.

The stacked portion refers to a negative electrode structure at a position where the positive electrodes are stacked, and has a predominantly straight shape with reference to FIG. 1. The folding portion refers to a negative electrode structure at a position connecting between the stacked portions, and has a predominantly curved shape with reference to FIG. 1. The wrapping portion refers to a negative electrode structure at a position that wraps the stacked structure of the positive electrode and the negative electrode structure from the point where the topmost stacked portion ends, and has a mixture of straight and curved shapes with reference to FIG. 1.

As shown in FIG. 1, the negative electrode structure has a stack initiation portion at one end, and a wrapping portion at the other end relative to the longitudinal direction. Further, the folding portion and the stacked portion are alternately located between the stack initiation portion and the wrapping portion, wherein the stack initiation portion abuts the folding portion and the wrapping portion abuts the stacked portion. Since the stacked portion is substantially equal to the length of the positive electrode, the length of each stacked portion is substantially equal. However, the stack initiation portion located at the start of the stacked structure may vary in length from the positive electrode depending on the location of the initiation.

The negative electrode structure forms an electrode assembly with a plurality of positive electrodes. To provide a better understanding of the structure of the electrode assembly, FIG. 1 provides an exemplary structure of an electrode assembly comprising a negative electrode structure with lithium metal interposed between two separators, and a positive electrode. Since the negative electrode structure includes a negative electrode (110) and a separator (120), a electrode assembly (100) includes a positive electrode (130), a negative electrode (110), and a separator (120).

The electrode assembly (100) has a plurality of stacked portions sequentially positioned side by side in the thickness direction by the folding portion. In addition, at least one positive electrode is located between stacked portions that are adjacent in the thickness direction. The electrode assembly (100) may have a structure in which the outer surface in the thickness direction and the length direction is surrounded by a wrapping portion or the like.

In the electrode assembly (100), stacked portions of the negative electrode structure and positive electrodes are alternatively and sequentially stacked, so the negative electrode structure including the folding portions has a zigzag shape. In other words, the folding portions located sequentially from the stacked portion located at one end of the negative electrode structure are alternately located on the left or right side of the electrode assembly. If stacked portions of the negative electrode structure and positive electrodes are not stacked alternately, and if two or more stacked portions or positive electrodes are stacked consecutively, there may be no potential difference between the consecutively stacked layers, and the efficiency of the battery may be reduced.

In the electrode assembly (100), the negative electrode (110) does not include a current collector supporting the lithium metal. Since the negative electrode (110) does not include a current collector, the loading amount of the negative electrode active material within the electrode assembly can be improved, which can contribute to improved performance of the battery. If the negative electrode (110) is mainly composed of lithium metal, the lithium metal may not be easy to process, such as by cutting, due to its high ductile and viscosity. However, in the electrode assembly (100), the negative electrode is applied in the form of a negative electrode structure with the lithium metal (110) interposed between the separators (120), which can compensate for the insufficient physical properties of the lithium metal within the electrode assembly.

The electrode assembly (100) may form tabs on the positive electrode (130) and negative electrode (110), respectively, to electrically connect with the exterior of the lithium secondary battery. The tabs may be formed on each layer, and the plurality of positive electrode tabs and the plurality of negative electrode tabs may each be bonded together and connected to the leads. The lead transfers the electrical energy generated by the lithium secondary battery to the exterior. The tabs in the positive electrode (130) may be formed primarily on the non-coated portion of the current collector, where no positive electrode active material is applied. In contrast, since the tabs in the negative electrode (110) do not include a current collector supporting the lithium metal, the lithium metal can be cut to form the tabs.

The positive electrode and negative electrode tabs may be formed in the same direction or in opposite directions. As described above, the tabs of each layer must be bonded as one for the positive electrode tab and the negative electrode tab, respectively, so that the positive electrode tabs are positioned to overlap with each other in the thickness direction and the negative electrode tabs are positioned to overlap with each other in the thickness direction. The positive electrode and negative electrode tabs do not overlap in the thickness direction because an electrical short can occur if the positive electrode and negative electrode tabs overlap. FIG. 1 shows the location of the negative electrode tab (110T) formed on the lithium metal in the electrode assembly (100). The present invention is less concerned with the positive electrode tab, so the positive electrode tab is not shown in FIG. 1. As shown in FIG. 1, the negative electrode tabs (110T) are positioned to overlap with each other in the thickness direction. If the positive electrode and negative electrode tabs are positioned in opposite directions, they do not overlap in the thickness direction, so the positive electrode and negative electrode tabs can be freely positioned on each layer. In contrast, if the positive electrode and negative electrode tabs are located in the same direction, the positive electrode and negative electrode tabs may be located on one side relative to the center, respectively, so that they do not overlap each other.

The lithium metal (110) applied to the electrode assembly (100) may have a shape as shown in FIG. 2 or FIG. 3. FIGs. 2 and 3 provide exemplary structures of lithium metal processed for application in electrode assemblies. In FIG. 2, the lithium metal (110) has tabs (110T) formed in each layer, and it corresponds to the stacked portion. In FIG. 3, the lithium metal (110) is divided into a portion with tabs (110T) and a portion without tabs (110T), wherein the portion with tabs (110T) corresponds to the stacked portion and the portion without tabs (110T) corresponds to the wrapping portion.

According to one embodiment of the present invention, the processed lithium metal (110) includes chamfers (110C) with tabs (110T). The chamfer (110C) may be located at a corner portion of the electrode assembly (100), and the corner portion of the electrode assembly (100) may be shaved off by the chamfer (110C) to form an angled face. The chamfer (110C) may be a reference for dividing each layer in the electrode assembly (100). The lithium metal (110) may be folded based on a pair of widthwise opposing chamfers (110C) in the lithium metal (110). Because the chamfer (110C) can be a reference for dividing each layer, a pair of tabs (110T) adjacent to the chamfer (110C) can be located at the same distance from the chamfer (110C) in order for the tabs (110T) to be positioned side-by-side in the electrode assembly (100) in the thickness direction. As shown in FIG. 3, the chamfer (110C) may be formed uniformly on the wrapping portion. The reason for the formation of the chamfer (110C) on the wrapping portion is due to the processing of the lithium metal according to one embodiment of the present invention, which will be described in more detail below. The chamfer (110C) formed in the wrapping portion may not be the basis for dividing each layer.

The present invention provides a method for processing a longitudinally extended lithium metal, such as a negative electrode used in an electrode assembly described above. The method is divided into a supplying step, a cutting step, and a recovering step. According to one embodiment of the present invention, the supplying step comprises separately providing a first raw material comprising lithium metal bonded with a first protective layer on one side, and a second raw material comprising a second protective layer. The supplying step refers to the process up to positioning the raw material in front of the cutter prior to the cutting step. The raw material positioned in front of the cutter by the supplying step has lithium metal between the first protective layer and the second protective layer. The lithium metal may not be located between the first and second protective layers before it is positioned in front of the cutter. Lithium metal being located between the first and second protective layers does not mean that the lithium metal is in contact with the first and second protective layers. According to one embodiment of the invention, the first protective layer is supplied in contact with the lithium metal, so that the second protective layer, which is supplied separately, is spaced apart from the lithium metal, even though it is in contact with the lithium metal. The second protective layer may contact the lithium metal during cutting.

According to one embodiment of the present invention, the cutting step cuts the lithium metal by pressing the raw material supplied via the supplying step into the cutter on the first protective layer and the second protective layer. Here, "on the first protective layer and the second protective layer" means the opposite direction that is not opposite to the lithium metal in the first protective layer and second protective layer. The cutter may be composed of a cutting portion comprising the actual cutting means and a supporting portion not comprising the cutting means. When the cutting portion is located on the first protective layer, the supporting portion may be located on the second protective layer, and when the cutting portion is located on the second protective layer, the supporting portion may be located on the first protective layer. In the cutter, as the cutting portion moves toward the supporting portion, the raw material between the cutting portion and the supporting portion may be pressurized, thereby cutting the lithium metal. In this case, the first and second protective layers may not be cut.

According to one embodiment of the present invention, the recovering step separates and recovers the first raw material and the second raw material after cutting in the cutting step. Even if the first and second raw materials are separated, it is necessary to separate the processed lithium metal and supply it to the next stage in consideration of the post-processing stage of the lithium metal in the recovering step. Here, the next step may be, for example, bonding the processed lithium metal between two separators to fabricate a negative electrode structure such as described above.

According to one embodiment of the present invention, in the recovering step, the cut lithium metal pieces of the first raw material are removed. The lithium metal pieces refer to the portions of lithium metal, supplied as raw material, which are cut off and not utilized as a negative electrode. If the lithium metal is cut to the width of the raw material, the lithium metal pieces may not be joined together and may not be easy to remove. Therefore, it may be desirable to cut the lithium metal slightly inward from the width of the supplied raw material so that the lithium metal pieces remain connected as a single unit. The method of removing lithium metal pieces from the first raw material is not particularly limited.

According to one embodiment of the present invention, the first raw material from which the lithium metal pieces are removed in the above recovering step is separated into the processed lithium metal and the first protective layer, and they are recovered. Even if a lithium metal piece is recovered from the first raw material, the processed lithium metal may still be bonded to the first protective layer. The processed lithium metal must be separated from the first protective layer so that the processed lithium metal can be fed into the next step of the electrode assembly manufacturing process.

The above processing method of lithium metal may be implemented by a roll processing apparatus. According to one embodiment of the present invention, the first raw material is supplied and recovered by a first set of rolls, and the second raw material is supplied and recovered by a second set of rolls. Each of the first set of rolls and second set of rolls comprises a plurality of rolls on which the raw material can be moved. Multiple rolls can have different functionalities individually. When the method of processing lithium metal is implemented in a roll processing apparatus, the lithium metal can be processed continuously.

To facilitate understanding of the structure of the roll processing apparatus, FIG. 4 provides the structure of an exemplary device capable of implementing a processing method of lithium metal according to one embodiment of the present invention. The roll processing apparatus includes a first set of rolls (210) located at the top and a second set of rolls (220) located at the bottom, and includes a cutter (230) for cutting the lithium metal. In some cases, the first set of rolls may be located at the bottom of the roll processing apparatus and the second set of rolls may be located at the top of the roll processing apparatus. The first set of rolls (210) and the second set of rolls (220) are not named by location, but are determined by the object being moved. The first set of rolls (210) moves a first raw material comprising lithium metal and a first protective layer, and the second set of rolls (220) moves a second raw material comprising a second protective layer.

The first set of rolls (210) includes a winder (211), a running roll (212), and an alignment roll (213). Similarly, the second set of rolls (220) includes a winder (221), a running roll (222), and an alignment roll (223). The second set of rolls (220) is not necessarily formed symmetrically with the first set of rolls (210), and its configuration can be freely adjusted according to the type of material to be applied. The winders (211, 221) supply or recover the first or second raw material. By the winders (211, 221), the first raw material and the second raw material may be fed in the form of rolls and recovered in the form of rolls. The running rolls (212, 222) move the first and second raw materials and are disposed between the winders (211, 221) and the alignment rolls (213, 223). The running rolls (212, 222) may determine the travel path of the first and second raw materials, and may comprise a plurality of rolls having various functionalities. The alignment rolls (213, 223) determine the positions of the first and second raw materials in front of the cutter. Here, "in front of the cutter" may mean between the cutting portion (231) and the supporting portion (232) of the cutter (230), as shown in FIG. 4.

The cutter (230) includes a cutting portion (231) and a supporting portion (232). The cutting portion (231) comprises cutting means, such as a cutting blade, and the supporting portion (232) supports the raw material to be pressed by movement of the cutting portion (231). In order to pressurize the raw material located between the cutting portion (231) and the supporting portion (232), the cutting portion (231) and the supporting portion (232) are located opposite each other with respect to the lithium metal. The cutting portion (231) may be located at the top of the raw material and the supporting portion (232) may be located at the bottom of the raw material, and in some cases, vice versa.

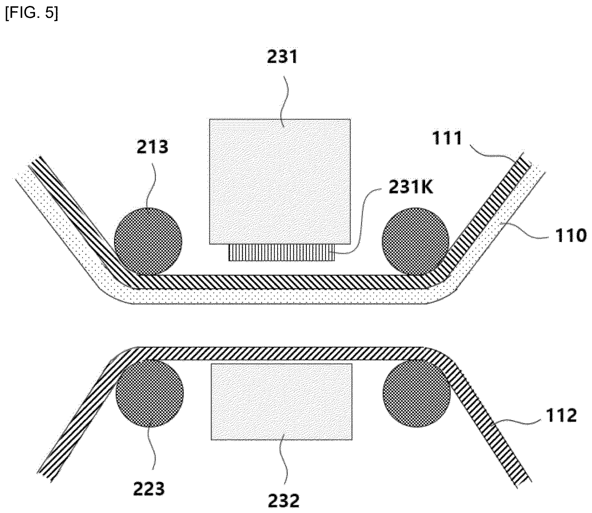

To provide a better understanding of where the lithium metal is cut in the roll processing apparatus, FIG. 5 provides an enlarged drawing of the cutting position in a processing apparatus for lithium metal according to one embodiment of the present invention. According to FIG. 5, the first and second raw materials are separated by the alignment rolls (213, 223), respectively, and placed between the cutting portion (231) and the supporting portion (232). The first raw material is supplied with a first protective layer (111) bonded to one side of the lithium metal (110), wherein the lithium metal (110) is located between the first protective layer (111) and the second protective layer (112). In the cutter (230), the cutting portion (231) is located at the top of the first protective layer (111) and the supporting portion (232) is located at the bottom of the second protective layer (112). According to one embodiment of the present invention, the cutting portion (231) comprises a cutting blade (231K) protruding towards the first protective layer (111). The cutting blade (231K) may protrude a length suitable for cutting the lithium metal (110) between the first protective layer (111) and the second protective layer (112), such as 0.5 mm to 3 mm, 1 mm to 2 mm, and more specifically about 1.5 mm.

Prior to pressurization with the cutter (230), the first and second raw materials are preferably spaced apart. The first raw material comprises a first protective layer (111) and lithium metal (110), and the second raw material comprises a second protective layer (112), wherein the second protective layer (112) protects the lithium metal (110) from adhering to the cutter (230) during cutting. The second protective layer (112) adheres to the lithium metal (110) only upon cutting, and it is advantageous to arrange the first and second raw materials with a gap between them in order to facilitate easy detachment. According to one embodiment of the present invention, in the cutting step, the first raw material and the second raw material are spaced apart by at least 5 cm before being pressed by the cutter. Specifically, the separation distance between the first raw material and the second raw material may be 5 cm or more, 5 cm to 20 cm, or 5 cm to 15 cm. Attachment to and removal from the second protective layer (112) via cutting at the separation distance may be facilitated.

To provide a better understanding of the process by which lithium is cut in the roll processing apparatus, FIG. 6 provides a schematic drawing illustrating the cutting process of lithium metal according to one embodiment of the present invention. Specifically, FIG. 6(a) shows the position of the cutting portion before cutting, and FIG. 6(b) shows the position of the cutting portion after cutting. As shown in FIG. 6, the cutting portion (231) may move toward the supporting portion (232) to pressurize the raw material to cut the lithium metal (110). The movement of the cutting portion (231) rather than the supporting portion (232) may result in a sharper cut and may be advantageous for detachment of the lithium metal (110) from the second protective layer (112) after cutting. As the cutting portion (231) returns to its original position after the cutting is complete, the lithium metal (110) is detached and spaced away from the second protective layer (112).

For cutting, when the cutting portion (231) is moved toward the supporting portion (232), the protruding cutting blade (231K) is dragged along with the first raw material in contact with the first protective layer (111). The sharp cutting blade (231K) may have less area in contact with the first protective layer (111), making it difficult to transmit sufficient force to drag and move the first raw material. Furthermore, when cutting, if only a portion of the cutting blade (231K) are protruded, defects such as wrinkling of the lithium metal located inside the cutting blade (231K) may occur. According to one embodiment of the present invention, the internal space between the cutting blade (231K) protruding from the cutting portion (231) and the cutting blade (231K) is filled with a buffer material. To aid in understanding the location of the buffer material in the cutting portion (231), FIG. 7 provides a schematic drawing of a cutting portion including a cutting blade and a buffer material, in accordance with one embodiment of the present invention. FIG. 7 shows a view of the cutting portion (231) from the first protective layer (111) side, to clearly show the location of the buffer material (231F). The buffer material (231F) may be, but is not limited to, any material that has a degree of support that compresses the first protective layer (111), but does not interfere with cutting by the cutting blade (231K). As the buffer material (231F), for example, a sponge may be used. To increase cutting efficiency, ultrasonic waves can be applied to the cutting blade (231K), which can also mitigate the stresses of ultrasonic cutting in the area where the buffer material (231F) is located.

According to one embodiment of the present invention, the lithium metal (110) is cut by pressurization of a protruding cutting blade (231K) and ultrasonication. By applying ultrasonic waves to the cutting blade (231K), the cutting efficiency can be increased. According to one embodiment of the present invention, when the lithium metal (110) and the second protective layer (112) are in contact, ultrasonic waves are irradiated through the cutting blade (231K). As described above, for cutting, when the cutting portion (231) moves toward the supporting portion (232), the protruding cutting blade (231K) may drag the first raw material while being in contact with the first protective layer (111), and if the cutting blade is irradiated with ultrasound, the lithium metal may be damaged during the movement. According to one embodiment of the present invention, the depth of irradiation of the ultrasound is 50% to 150%, 55% to 140%, 60% to 130%, based on the sum of the thicknesses of the first and second raw materials. The depth of irradiation of the ultrasonic waves means the distance from the cutting blade (231K) to the point where the ultrasonic waves are transmitted.

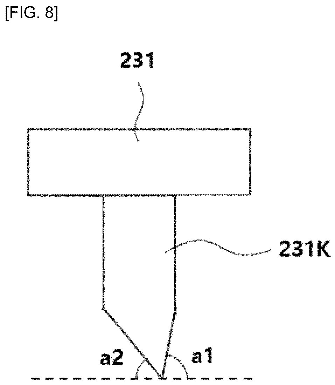

According to one embodiment of the present invention, the cutting blade (231K) has an asymmetrical shape on both sides relative to the end of the cutting blade (231K). To provide a better understanding of the shape of the end of the cutting blade (231K), FIG. 8 provides a schematic illustration of the shape of the end of the cutting blade in a cutting portion according to one embodiment of the present invention. The asymmetrical shape of the cutting blade (231K) means that the angles (a1, a2) from the horizontal line tangent to the tip of the cutting blade to the cut is different on both sides, as shown by the dashed lines in FIG. 8. The asymmetrical shape of the cutting blade (231K) allows the cutting efficiency to be maintained even when the cutting blade (231K) is thicker. Increasing the thickness of the cutting blade (231K) may improve the durability of the cutting blade (231K). The cutting blade (231K) can be positioned such that the larger angle (a1) among the angles on both sides of the cutting blade (231K) faces the processed lithium metal and the smaller angle (a2) faces the piece of lithium metal. The larger angle (a1) of the cutting blade can be close to 90 degrees. Cutting the lithium metal piece with the cutting blade with the smaller angle may make the removal of the lithium metal piece easier.

In order to increase the processing efficiency of the lithium metal (110), the first protective layer (111) and the second protective layer (112) may be polymeric films of different materials. The first protective layer (111) travels with the lithium metal in a bonded state from supply to recovery and is in direct contact with the cutting blade (231K) of the cutting portion during cutting, requiring different functionality from that of the second protective layer (112), which is briefly bonded to the lithium metal during cutting and then separated.

According to one embodiment of the present invention, the first protective layer (111) is a polyolefin-based polymeric protective film. The polyolefin-based polymeric protective film may be, for example, a polyethylene protective film or a polypropylene protective film. The polyolefin-based polymeric protective film may have some degree of adhesion to the lithium metal (110), and may support the lithium metal (110) as it moves between rolls. Furthermore, the polyolefin-based polymeric protective film has an adequate level of durability so that it will not be cut when pressurized with the cutting blade (231K) to cut the lithium metal (110). Furthermore, the polyolefin-based polymeric protective film does not have an excessively large release force from the lithium metal, allowing the lithium metal (110) to be separated without damage during the recovering step.

According to one embodiment of the present invention, the second protective layer (112) is a polyester-based polymeric protective film. The polyester-based polymeric protective film may be, for example, a polyethylene terephthalate protective film. The polyester-based polymeric protective film is durable enough to support the lithium metal (110) during cutting, while still allowing the lithium metal (110) to be removed without damage after cutting.

In the present invention, the first raw material and the second raw material may have a suitable thickness considering their respective functions. According to one embodiment of the present invention, the lithium metal (110) constituting the first raw material has a thickness of 10 µm to 90 µm, 20 µm to 80 µm, 30 µm to 70 µm. The thickness of the lithium metal (110) may be appropriately adjusted to account for the specifications of the applied electrode assembly. According to one embodiment of the present invention, the thickness of the first protective layer (111) constituting the first raw material is 10 µm to 50 µm, 15 µm to 45 µm, or 20 µm to 40 µm. Within the thickness range described above, the first protective layer (111) can be sufficiently functional in the processing of the lithium metal (110) according to one embodiment of the present invention. According to one embodiment of the present invention, the thickness of the second protective layer (112) constituting the second raw material is 50 µm to 100 µm, 55 µm to 95 µm, or 60 µm to 90 µm. Within the thickness range described above, the second protective layer (112) may be sufficiently functional in the processing of the lithium metal (110) according to one embodiment of the present invention.

Given that the first protective layer (111) and the second protective layer (112) must ultimately be separated from the lithium metal (110), the ability to release from the lithium metal (110) can be an important criterion for material selection. The second protective layer (112) may have a lower release force from the lithium metal (110) than the first protective layer (111), in that the second protective layer (112) is only briefly bonded to the lithium metal (110) upon cutting, after which it must immediately separate from the lithium metal (110). According to one embodiment of the present invention, the second protective layer (112) has a release force of 20 gf/in or less, 5 gf/in to 20 gf/in, 6 gf/in to 17 gf/in, 7 gf/in to 15 gf/in, or 8 gf/in to 12 gf/in. The release force may be measured in accordance with ASTM D3330. For example, the release force means the force of peeling off a release film attached to a Tesa7475 standard adhesive tape by reciprocatingly pressing the release film with a load of 2 kg three times and stored for 24 hours at a temperature of 25°C, and measured according to the peel rate using a measuring instrument (AR-1000, Chem Instruments) at a temperature of 25°C, specifically, it can be stored at a 25°C and 50 RH% atmosphere for 24 hours, and then measured at a peel rate of 0.3 m/min at a 25°C and 50 RH% atmosphere. According to one embodiment of the present invention, the release force of the first protective layer (111) is greater than that of the second protective layer (112). Specifically, the release force of the first protective layer (111) may be more than 1 times, 1.1 times or more, 1.2 times or more, 1.3 times or more, 1.4 times or more, less than 2 times, 1.9 times or less, 1.8 times or less, 1.7 times or less, 1.6 times or less, more than 1 times but less than 2 times, 1.2 to 1.9 times, or 1.4 to 1.8 times or more, based on the release force of the second protective layer (112). The difference in the release force of the first protective layer (111) and the second protective layer (112) is due to the difference in the functionality of the first protective layer (111) and the second protective layer (112).

The first protective layer (111) or second protective layer (112) may form a coating layer on the side abutting the lithium metal (110) to add functionality, such as release force. It is not particularly limited as long as it can secure the functionality required for the present invention. According to one embodiment of the present invention, the coating layer comprises silicone. It may be preferred that the coating layer is applied to the second protective layer (112).

In the processing method of lithium metal according to one embodiment of the present invention, the first raw material and the second raw material may be supplied and recovered in different states. The first raw material and the second raw material running in the processing apparatus (200) of the lithium metal may have different tensions. In the roll processing apparatus, which is one embodiment of the processing apparatus (200) for lithium metal, each of the first set of rolls (210) and the second set of rolls (220) includes a dancer roll capable of adjusting the tension of the raw material running on the rolls. The dancer roll may be one or more of the running rolls (212, 222) of FIG. 4, wherein the roll itself moves to adjust the tension of the raw material.

According to one embodiment of the present invention, the first raw material running on the first set of rolls (210) has a tension of 20 N/m to 40 N/m, 25 N/m to 40 N/m, or 25 N/m to 35 N/m. According to one embodiment of the present invention, the second raw material running on the second set of rolls (220) has a tension of 40 N/m to 60 N/m, 45 N/m to 60 N/m, or 45 N/m to 55 N/m. The tension can be determined by the value indicated on the roll processing apparatus (manufacturer: ARISE, product name: W500). Due to its physical properties, the lithium metal included in the first raw material cannot generally increase tension. The tension ranges of the first raw material described above are values that are possible by bonding the lithium metal (110) with the first protective layer (111). Nevertheless, excessive tensioning may damage the lithium metal (110) in the first raw material. In contrast, the second raw material consists of only the second protective layer (112) without lithium metal, which allows for a higher tension.

When cutting the lithium metal (110), as shown in FIG. 6, as the cutting portion (231) moves toward the supporting portion (232), the first raw material in contact with the cutting blade also moves toward the second raw material, joining the first and second raw materials. In this case, the lithium metal (110) may be damaged by the movement of the cutting portion (231) if the tension of the first raw material is maintained. According to one embodiment of the present invention, the tension of the first raw material is reduced by 10% to 20%, 12.5% to 20%, 15% to 20% when in contact with the cutting portion (231) compared to when running. By reducing the tension of the first raw material upon contact with the cutting portion (231), damage to the lithium metal (110) of the first raw material can be minimized, and then, upon separation from the cutting portion (231), the tension can be increased again to facilitate separation of the first raw material from the second raw material.

The roll processing apparatus (200) according to one embodiment of the present invention may further include configurations such as encoders, EPCs, etc. in addition to the dancer roll in the running roll. The encoder is responsible for converting the signal to information. The edge position controller (EPC) is responsible for centering the raw material on the roll. According to one embodiment of the present invention, the roll processing apparatus (200) comprises a sensor for checking whether the first and second raw materials are well separated in the recovering step after cutting. After cutting, when the cutting portion (231) returns to its original position, it is necessary to check whether the first raw material is well separated from the second raw material by means of a sensor, because if the first raw material is not well separated from the second raw material, lasting damage to the lithium metal may occur in future processes. If the first raw material is not well separated from the second raw material, the apparatus can be stopped to separate the first material or increase the tension of the first and second raw materials momentarily to separate it.

The method of processing lithium metal according to one embodiment of the present invention includes cutting the lithium metal (110) in a cutting step to form negative electrode tabs (110T). The negative electrode tabs (110T) are positioned side by side in the thickness direction as shown in FIG. 1. The negative electrode tabs (110T), located side-by-side in the thickness direction, may subsequently be bonded and connected to the leads. In the cutting step, the lithium metal (110) is cut to form a chamfer (110C) with the negative electrode tab (110T). The chamfer (110C) may subsequently be a reference for dividing each layer in the electrode assembly (100).

According to one embodiment of the present invention, pair of adjacent tabs (110T) relative to the chamfer (110C) are spaced apart by an equal distance from the chamfer. This means that pair of adjacent tabs (110T) are located at symmetrical distances relative to the chamfer (110C). By positioning the tabs (110T) in this manner, the tabs (110T) of each layer can be positioned side-by-side in the thickness direction when folded relative to the chamfer (110C) for fabrication of the electrode assembly (100).

According to one embodiment of the present invention, the tab (110T) is positioned closer to either of the pair of adjacent chamfers (110C) relative to the tab. This means that pair of adjacent chamfers (110C) are located at non-symmetrical distances relative to the tab. If the negative electrode tabs (110T) are not located on the center each layer, as shown in FIG. 1, but are biased to one side, unfolding the lithium metal (110) of the negative electrode may result in a structure as shown in FIGs. 2 and 3. When the negative electrode tabs (110T) are formed in this manner, it may be an advantageous structure for positioning the positive electrode tabs in the same direction. However, this asymmetry requires special attention when processing the lithium metal (110) to extend longitudinally, as in one embodiment of the present invention.

When processing lithium metal in accordance with one embodiment of the present invention, it is not possible to fabricate a negative electrode tab (110T) that is biased to one side of a layer in an electrode assembly if the cut is made relative to the layer. This is because when manufacturing an electrode assembly, the lithium metal is folded rather than cut for each layer. Therefore, it may be desirable to cut at least two layers of the configuration at once. According to one embodiment of the present invention, when the areas separated by the four chamfers (110C) is viewed as one unit area, the cutter (230) cuts two or more unit areas at once. The unit area may refer to a layer to be applied to the electrode assembly. Since the processed lithium metal (110) as shown in FIG. 2 has a repeating structure every two unit areas, the cutting blade (231K) may be configured as shown in FIG. 7. When having a cutting blade (231K) as shown in FIG. 7, the tab (110T) can be formed by running and cutting the roll in two unit areas.

If the tab (110T) in each layer has an asymmetrical structure, the cutting blade (231K) forming the tab can also process the lithium metal (110) applied to the wrapping portion without a tab. According to one embodiment of the present invention, the unit areas without a tab are manufactured by overlapping cuts after moving by only one unit area after cutting. As described above, when having the cutting blade (231K) as shown in FIG. 7, the tab (110T) can be formed by running and cutting the roll in two unit areas. However, in contrast, if the roll is driven by moving one unit area at a time, there are two overlapping cuts in the unit area. The two cuts occur to form tabs in a different location, so the tab formed by the first cut is removed by the second cut. In this case, the tab should preferably be offset to one side of the unit area, so that the tab does not pass through the center of the unit area, in order to cut the tab perfectly. Since the chamfer (110C) is formed by cutting, if it does not travel in the unit of the unit area, the chamfer (110C) may be formed in an undesirable position, which is not preferable.

As shown above, although the examples are described by limited examples and drawings, one of ordinary skill in the art can make various modifications and variations in view of the above descriptions. For example, even if the provided techniques may be performed in a different order from the above-described methods, and/or the provided components such as the systems, structures, devices, circuits, etc. may be combined in a different form from the above-described methods, or substituted or replaced by other components or equivalents, the desired results can be achieved.

### [Reference Numerals]

100: (Stacked-folded) Electrode assembly
110: Lithium metal (Negative electrode)
110T: Lithium metal tab (Negative electrode tab)
111: First protective layer
112: Second protective layer
120: Separator
130: Positive electrode
200: Processing apparatus for lithium metal
210: First set of rolls
211: Winder (for supplying and recovering the first raw material)
212: Running roll (of the first raw material)
213: Alignment roll (of the first raw material)
220: Second set of rolls
221: Winder (for supplying and recovering the second raw material)
222: Running roll (of the second raw material)
223: Alignment roll (of the first second material)
230: Cutter
231: Cutting portion (of the cutter)
231K: Cutting blade (of the cutting portion)
231F: Buffer material (of the cutting portion)
232: Supporting portion (of the cutter)
a1: First angle of the cutting blade
a2: Second angle of the cutting blade

## Claims

1. A method for processing lithium metal for a negative electrode of an electrode assembly, comprising the steps of:
supplying raw materials by separating a first raw material comprising lithium metal bonded with a first protective layer on one side, and a second raw material comprising a second protective layer, so that the lithium metal is located between the first and second protective layers;
cutting the lithium metal by pressurizing the supplied raw materials with a cutter on the first and second protective layers; and
recovering the raw materials by separating the first and second raw materials after cutting.

2. The method for processing lithium metal for the negative electrode of an electrode assembly according to claim 1,
wherein the first raw material is supplied and recovered by a first set of rolls,
the second raw material is supplied and recovered by a second set of rolls, and
each of the first set of rolls and second set of rolls comprises a plurality of rolls on which the raw material can be moved.

3. The method for processing lithium metal for the negative electrode of an electrode assembly according to claim 1,
wherein the first protective layer and the second protective layer are polymeric protective films of different materials.

4. The method for processing lithium metal for the negative electrode of an electrode assembly according to claim 3,
wherein the first protective layer is a polyolefin-based polymeric protective film.

5. The method for processing lithium metal for the negative electrode of an electrode assembly according to claim 4,
wherein the second protective layer is a polyester-based polymeric protective film.

6. The method for processing lithium metal for the negative electrode of an electrode assembly according to claim 1,
wherein, in the cutting step, the first raw material and the second raw material are spaced apart before being pressed by the cutter.

7. The method for processing lithium metal for the negative electrode of an electrode assembly according to claim 6,
wherein the cutter comprises a cutting portion and a supporting portion,
wherein the cutting portion and the supporting portion are positioned opposite each other relative to the lithium metal.

8. The method for processing lithium metal for the negative electrode of an electrode assembly according to claim 7,
wherein the cutting portion includes a protruding cutting blade,
wherein the cutting portion moves toward a supporting portion to pressurize the raw material and cut the lithium metal.

9. The method for processing lithium metal for the negative electrode of an electrode assembly according to claim 8,
wherein an internal space between the cutting blades protruding from the cutting portion is filled with a buffer material.

10. The method for processing lithium metal for the negative electrode of an electrode assembly according to claim 7,
wherein the lithium metal is cut by pressurization of a protruding cutting blade and ultrasonication.

11. The method for processing lithium metal for the negative electrode of an electrode assembly according to claim 2,
wherein each of the first set of rolls and the second set of rolls includes a dancer roll, which can adjust the tension of the raw material running on the roll,
wherein, by means of the dancer roll, the first raw material running on the first set of rolls and the second raw material running on the second set of rolls have different tensions.

12. The method for processing lithium metal for the negative electrode of an electrode assembly according to claim 11,
wherein the first raw material running on the first set of rolls has a tension of 20 N/m to 40 N/m.

13. The method for processing lithium metal for the negative electrode of an electrode assembly according to claim 11,
wherein the second raw material running on the second set of rolls has a tension of 40 N/m to 60 N/m.

14. The method for processing lithium metal for the negative electrode of an electrode assembly according to claim 11,
wherein the tension of the first raw material is reduced by 10% to 20% when in contact with a cutter as compared to when running.

15. The method for processing lithium metal for the negative electrode of an electrode assembly according to claim 1,
wherein the cutting step comprises cutting the lithium metal to form tabs.

16. The method for processing lithium metal for the negative electrode of an electrode assembly according to claim 15,
wherein the cutting step comprises cutting the lithium metal to form tabs and chamfers.

17. The method for processing lithium metal for the negative electrode of an electrode assembly according to claim 16,
wherein pair of adjacent tabs relative to the chamfer are spaced apart by an equal distance from the chamfer.

18. The method for processing lithium metal for the negative electrode of an electrode assembly according to claim 17,
wherein the tab is located closer to either of a pair of adjacent chamfers relative to the tab.

19. The method for processing lithium metal for the negative electrode of an electrode assembly according to claim 16,
wherein, when the areas separated by the four chamfers is viewed as one unit area, the cutter cuts two or more unit areas at once.

20. The method for processing lithium metal for the negative electrode of an electrode assembly according to claim 19,
wherein the cutting step manufactures a unit area without a tab,
wherein the unit area without a tab is manufactured by overlapping cuts after moving by only one unit area after cutting.

21. The method for processing lithium metal for the negative electrode of an electrode assembly according to claim 1,
wherein, in the recovering step, the cut lithium metal pieces of the first raw material are removed.

22. The method for processing lithium metal for the negative electrode of an electrode assembly according to claim 21,
wherein, in the recovering step, the first raw material from which the lithium metal pieces are removed in the above recovering step is separated into the processed lithium metal and the first protective layer, and they are recovered.

23. The method for processing lithium metal for the negative electrode of an electrode assembly according to claim 8,
wherein the cutting blade has an asymmetrical shape on both sides relative to the end of the cutting blade.

24. The method for processing lithium metal for the negative electrode of an electrode assembly according to claim 1,
wherein the process of separating the first raw material and the second raw material in the recovering step is checked by means of a sensor.

25. The method for processing lithium metal for the negative electrode of an electrode assembly according to claim 10,
wherein, when the lithium metal and the second protective layer are in contact, the cutting blade generates ultrasonic waves.
